# FASCICULE DE BREVET EUROPEEN

(11) **EP 4 610 171 B1**
(45) Date de publication et mention de la délivrance du brevet: **15.04.2026**
(21) Numéro de dépôt: 25157371.3
(22) Date de dépôt: 12.02.2025
(51) Int. Cl.: B64D 15/12, B64D 33/02

(54) **ENTRÉE D'AIR D'AÉRONEF COMPRENANT AU MOINS UN SYSTÈME DE DÉGIVRAGE PRINCIPAL AINSI QU'AU MOINS UN SYSTÈME DE DÉGIVRAGE SECONDAIRE POSITIONNÉ AU NIVEAU D'UNE ÉCLISSE**
FLUGZEUGLUFTEINLASS MIT MINDESTENS EINEM HAUPTENTEISUNGSSYSTEM UND MINDESTENS EINEM SEKUNDÄREN ENTEISUNGSSYSTEM, DAS AN EINER VERBINDUNGSLASCHE POSITIONIERT IST
AIRCRAFT AIR INLET COMPRISING AT LEAST ONE MAIN DE-ICING SYSTEM AND AT LEAST ONE SECONDARY DE-ICING SYSTEM POSITIONED AT A SPLICE PLATE

(30) Priorité: 28.02.2024 FR 2401962
(43) Date de publication de la demande: 03.09.2025
(73) Titulaire: AIRBUS OPERATIONS (S.A.S.), 31060 Toulouse (FR)
(72) Inventeur: SAUDEL, Brice, 31060 TOULOUSE (FR); SMITH, Grégoire, 31060 TOULOUSE (FR)
(74) Mandataire: Airbus-OPS SAS

(56) Documents cités:
- EP-A2- 1 588 941
- WO-A2-2009/138833
- CA-A1- 2 839 736
- FR-A1- 3 136 506
- US-A1- 2013 037 655
- US-A1- 2020 115 030
- US-A1- 2021 078 717

## Description

La présente demande se rapporte à une entrée d'air d'aéronef comprenant au moins un système de dégivrage principal ainsi **qu'au** moins un système de dégivrage secondaire positionné au niveau d'une éclisse ainsi **qu'à** un aéronef comportant au moins une telle entrée d'air. Le document FR 3 136 506 A1 décrit une entrée d'air d'un ensemble de propulsion d'aéronef comprenant une lèvre ainsi qu'un système de dégivrage principal configuré pour dégivrer au moins partiellement la lèvre.

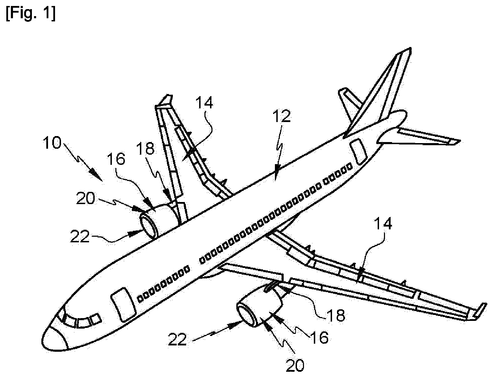

Selon un mode de réalisation visible sur la figure 1, un aéronef 10 comprend un fuselage 12, des ailes 14 positionnées de part et d'autre du fuselage 12 ainsi que des ensembles de propulsion 16 positionnés sous les ailes 14 et reliés à ces dernières par des mâts 18. Chaque ensemble de propulsion 16 comprend une motorisation ainsi qu'une nacelle 20, positionnée autour de la motorisation, qui présente à l'avant une entrée d'air 22.

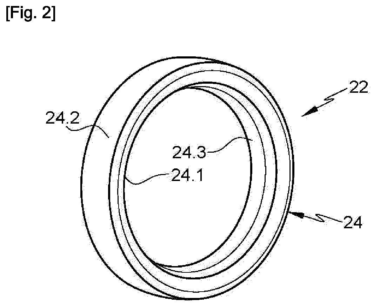

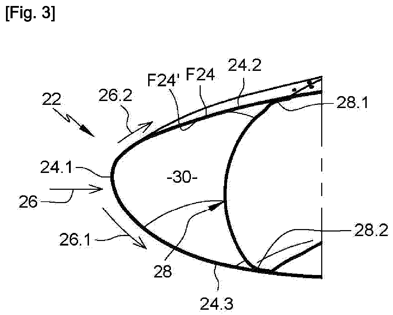

Selon un mode de réalisation visible sur les figures 2 et 3, l'entrée d'air 22 comprend une lèvre 24 qui présente une forme en C dans un plan de coupe longitudinal passant par l'axe de la motorisation. La lèvre 24 comprend un bord d'attaque 24.1 qui scinde un flux d'air 26 en un flux d'air intérieur 26.1 et un flux d'air extérieur 26.2, une portion extérieure 24.2 qui s'étend du bord d'attaque 24.1 jusqu'à un bord arrière extérieur de la lèvre 24 et sur laquelle s'écoule le flux d'air extérieur 26.2 ainsi qu'une portion intérieure 24.3 qui s'étend du bord d'attaque 24.1 jusqu'à un bord arrière intérieur de la lèvre 24 et sur laquelle s'écoule le flux d'air intérieur 26.1. La lèvre 24 présente une surface extérieure F24 en contact avec les flux d'air intérieur et extérieur 26.1, 26.2 ainsi qu'une surface intérieure F24' opposée à la surface extérieure F24.

L'entrée d'air 22 comprend également un cadre annulaire 28 qui présente un bord extérieur 28.1 relié à la portion extérieure 24.2 de la lèvre 24 ainsi qu'un bord intérieur 28.2 relié à la portion intérieure 24.3 de la lèvre 24, le cadre annulaire 28 et la lèvre 24 délimitant un conduit annulaire 30, appelé D-duct, qui s'étend sur toute la périphérie de l'entrée d'air 22.

En fonction des conditions climatiques et des phases de vol, du givre ou de la glace peut se former sur la surface extérieure F24 de la lèvre 24. Pour optimiser les conditions de vol, ce givre ou cette glace doit être retiré(e) ou la formation du givre ou de la glace doit être limitée ou empêchée. A cet effet, l'ensemble de propulsion 16 comprend un système de dégivrage pneumatique configuré pour injecter de l'air chaud dans le conduit annulaire 30.

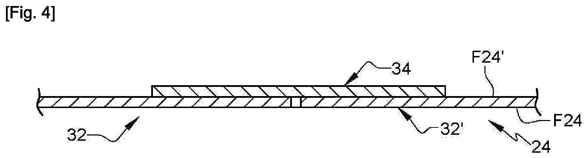

Selon un mode de réalisation visible sur la figure 4, la lèvre 24 comprend plusieurs panneaux 32, 32' juxtaposés ainsi qu'au moins une éclisse 34, reliant les panneaux 32, 32', située contre la surface intérieure F24'. Ainsi, la lèvre 24 présente une première épaisseur E1 en dehors des zones recouvertes par les éclisses 34 et une deuxième épaisseur E2 supérieure à la première épaisseur E1 au droit des zones recouvertes par les éclisses 34.

Lorsque le système de dégivrage pneumatique est activé, dans la mesure où la lèvre 24 n'a pas une épaisseur homogène, la surface extérieure F24 de la lèvre 24 présente des températures non homogènes, une première température en dehors des zones recouvertes par les éclisses 34 et une deuxième température inférieure à la première température au droit des zones recouvertes par les éclisses 34. La température de l'air injecté dans le conduit annulaire 30 est ajustée afin que la première température soit adaptée pour le dégivrage. La deuxième température étant inférieure à la première température, elle n'est pas optimisée pour le dégivrage si bien que le dégivrage n'est pas optimal sur toute la surface extérieure F24 de l'entrée d'air 24.

La présente invention vise à remédier à tout ou partie des inconvénients de l'art antérieur.

A cet effet, l'invention a pour objet une entrée d'air d'un ensemble de propulsion d'aéronef comprenant une lèvre ainsi qu'un système de dégivrage principal configuré pour dégivrer au moins partiellement la lèvre, ladite lèvre comportant :
- au moins des premier et deuxième panneaux qui présentent des faces extérieure et intérieure,
- au moins une éclisse, positionnée à cheval sur les premier et deuxième panneaux, qui s'étend entre des premier et deuxième bords latéraux et présente une face de contact comportant une première partie faisant face à une première zone de la face intérieure du premier panneau et une deuxième partie faisant face à une deuxième zone de la face intérieure du deuxième panneau,
- des éléments de fixation reliant l'éclisse, les premier et deuxième panneaux.

Selon l'invention, l'entrée d'air comprend au moins un système de dégivrage secondaire qui comporte au moins un échangeur thermique comprenant au moins une couche principale en un matériau conducteur thermique comprenant un orifice traversant pour chaque élément de fixation la traversant, ladite couche principale étant intercalée au moins partiellement entre l'éclisse et au moins un panneau parmi les premier et deuxième panneaux.

Le système de dégivrage secondaire permet de compenser la réduction de la capacité de dégivrage ou anti-givrage du système de dégivrage principal en raison de l'augmentation de l'épaisseur de la lèvre au droit de chaque éclisse et d'obtenir une capacité de dégivrage ou anti-givrage homogène sur toute la surface extérieure de la lèvre.

Selon une autre caractéristique, chaque élément de liaison présente une tige traversant l'éclisse et le premier ou deuxième panneau. En complément, chaque orifice traversant présente une section supérieure à celle de la tige de l'élément de fixation qui le traverse, l'orifice traversant et la tige étant agencés de manière à ce qu'il subsiste un jeu tout autour de la tige entre la couche principale et la tige, chaque élément de fixation étant électriquement isolé de la couche principale.

Selon une autre caractéristique, la couche principale présente des première et deuxième faces opposées. En complément, l'échangeur thermique comprend au moins des première et deuxième couches secondaires, entre lesquelles est positionnée la couche principale, qui recouvrent totalement les première et deuxième faces opposées de la couche principale, les couches secondaires étant en un matériau au moins électriquement isolant.

Selon une autre caractéristique, le système de dégivrage secondaire comprend au moins un corps chauffant, positionné en dehors des première et deuxième zones recouvertes par l'éclisse, configuré pour transformer une énergie électrique en une énergie thermique ainsi qu'au moins une liaison thermique configurée pour transférer une énergie thermique du corps chauffant vers l'échangeur thermique.

Selon une autre caractéristique, le corps chauffant comprend au moins une résistance électrique, une matrice en un matériau électriquement isolant dans laquelle est noyée la résistance électrique ainsi qu'au moins un connecteur électrique configuré pour relier la résistance électrique à une alimentation électrique.

Selon une autre caractéristique, le corps chauffant et l'échangeur thermique forment une seule et même plaque souple ou semi-rigide configurée pour s'adapter à la courbure de la lèvre.

Selon une autre caractéristique, le système de dégivrage secondaire s'étend entre des premier et deuxième bords, l'échangeur thermique s'étendant entre le premier bord et une limite séparatrice, le corps chauffant s'étendant entre la limite séparatrice et le deuxième bord, l'échangeur thermique présentant une largeur supérieure ou égale à celle de la première ou deuxième zone recouverte par l'éclisse.

Selon une autre caractéristique, l'entrée d'air comprend un premier système de dégivrage secondaire intercalé entre l'éclisse et le premier panneau ainsi qu'un deuxième système de dégivrage secondaire intercalé entre l'éclisse et le deuxième panneau.

Selon une autre caractéristique, le système de dégivrage secondaire comprend des premier et deuxième corps chauffants positionnés de part et d'autre de l'éclisse ainsi qu'au moins un échangeur thermique positionné entre les premier et deuxième corps chauffants.

Selon une autre caractéristique, la couche principale est un feuillard configuré pour transformer une énergie électrique en une énergie thermique, le système de dégivrage secondaire comprenant au moins une alimentation en énergie électrique configurée pour alimenter en énergie électrique la couche principale.

L'invention a également pour objet un aéronef comprenant au moins une entrée d'air selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue en perspective d'un aéronef,
- La figure 2 est une vue en perspective d'une entrée d'air,
- La figure 3 est une coupe longitudinale d'une partie d'une entrée d'air illustrant un mode de réalisation de l'art antérieur,
- La figure 4 est une coupe transversale d'une partie d'une entrée d'air illustrant un mode de réalisation de l'art antérieur,
- La figure 5 est une coupe longitudinale d'une partie d'une entrée d'air illustrant un mode de réalisation de l'invention,
- La figure 6 est une coupe transversale d'une partie d'une entrée d'air illustrant un mode de réalisation de l'invention,
- La figure 7 est une vue en éclaté de la partie d'entrée d'air visible sur la figure 6,
- La figure 8 est une coupe transversale d'une partie d'une entrée d'air illustrant un autre mode de réalisation de l'invention,
- La figure 9 est une coupe selon la ligne IX-IX de la figure 8,
- La figure 10 est une coupe transversale d'un panneau et d'un système de dégivrage secondaire illustrant un mode de réalisation de l'invention,
- La figure 11 est une coupe dans un plan parallèle à une lèvre d'une entrée d'air illustrant un autre mode de réalisation de l'invention,
- La figure 12 est une coupe selon la ligne XII-XII de la figure 11.

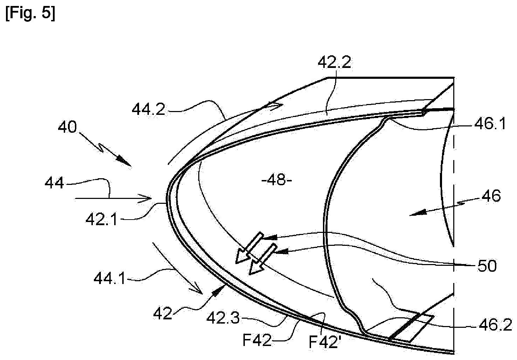

Selon un mode de réalisation visible sur la figure 5, une entrée d'air 40 comprend une lèvre 42 qui présente une forme en C dans un plan de coupe longitudinal passant par l'axe de la motorisation. La lèvre 42 comprend un bord d'attaque 42.1 qui scinde un flux d'air 44 en un flux d'air intérieur 44.1 et un flux d'air extérieur 44.2, une portion extérieure 42.2 qui s'étend du bord d'attaque 42.1 jusqu'à un bord arrière extérieur de la lèvre 42 et sur laquelle s'écoule le flux d'air extérieur 44.2 ainsi qu'une portion intérieure 42.3 qui s'étend du bord d'attaque 42.1 jusqu'à un bord arrière intérieur de la lèvre 42 et sur laquelle s'écoule le flux d'air intérieur 44.1. La lèvre 42 présente une surface extérieure F42 en contact avec les flux d'air intérieur et extérieur 44.1, 44.2 ainsi qu'une surface intérieure F42' opposée à la surface extérieure F42.

L'entrée d'air 40 comprend également un cadre annulaire 46 qui présente un bord extérieur 46.1 relié à la portion extérieure 42.2 de la lèvre 42 ainsi qu'un bord intérieur 46.2 relié à la portion intérieure 42.3 de la lèvre 42, le cadre annulaire 46 et la lèvre 42 délimitant un conduit annulaire 48, appelé D-duct, qui s'étend sur toute la périphérie de l'entrée d'air 40.

Selon une application, un aéronef comprend au moins un ensemble de propulsion qui présente, à l'avant, une entrée d'air 40.

Quel que soit le mode de réalisation, l'entrée d'air 40 comprend un système de dégivrage principal 50, qui peut être pneumatique ou électrique, configuré pour dégivrer au moins partiellement la lèvre 42. Dans le cas d'un système de dégivrage principal électrique, l'entrée d'air 40 peut ne pas comprendre de cadre avant 46 ou de conduit annulaire 48.

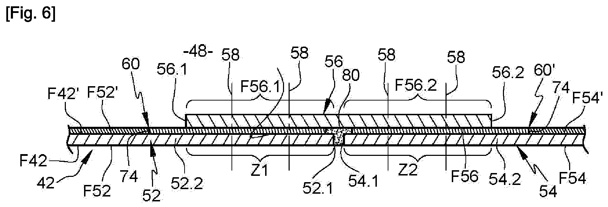

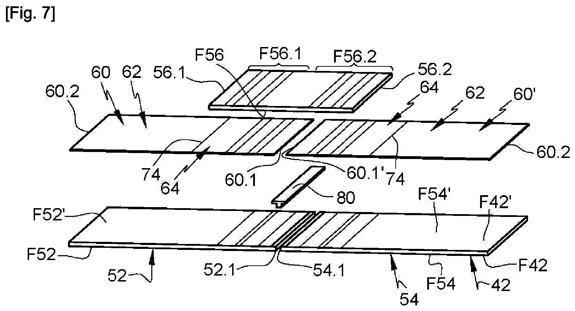

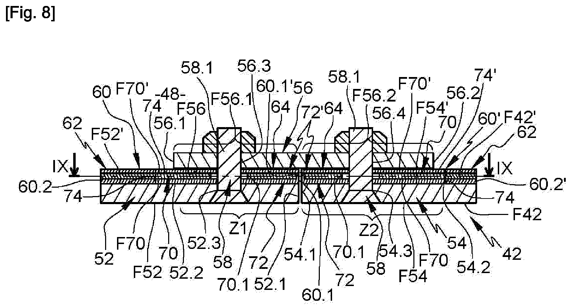

Comme illustré sur les figures 6 à 8, la lèvre 42 comprend au moins des premier et deuxième panneaux 52, 54 présentant des premier et deuxième chants 52.1, 54.1 juxtaposés, chacun des premier et deuxième panneaux 52, 54 comportant une face extérieure F52, F54 correspondant à la surface extérieure F42 de la lèvre 42 et une face intérieure F52', F54' correspondant à la surface intérieure F42' de la lèvre 42. La lèvre 42 comprend également au moins une éclisse 56, positionnée à cheval sur les premier et deuxième panneaux 52, 54, qui s'étend entre des premier et deuxième bords latéraux 56.1, 56.2 et présente une face de contact F56 qui comporte une première partie F56.1 faisant face à une première zone Z1 de la face intérieure F52' du premier panneau 52 et une deuxième partie F56.2 faisant face à une deuxième zone Z2 de la face intérieure F54' du deuxième panneau 54 ainsi que des éléments de fixation 58 reliant les premier et deuxième panneaux 52, 54 ainsi que l'éclisse 56. Chaque élément de fixation 58 comprend une tige 58.1 traversant le premier ou deuxième panneau 52, 54 et l'éclisse 56.

La première zone Z1 recouverte par la première partie F56.1 de l'éclisse 56 s'étend entre le premier chant 52.1 et une première limite 52.2 (sensiblement parallèle au premier chant 52.1) et présente une première largeur correspondant à la distance séparant le premier chant 52.1 et la première limite 52.2. En parallèle, la deuxième zone Z2 recouverte par la deuxième partie F56.2 de l'éclisse 56 s'étend entre le deuxième chant 54.1 et une deuxième limite 54.2 (sensiblement parallèle au deuxième chant 54.1) et présente une deuxième largeur correspondant à la distance séparant le deuxième chant 54.1 et la deuxième limite 54.2. Selon un mode de réalisation, les première et deuxième largeurs sont sensiblement égales.

Selon un mode de réalisation, chaque élément de fixation 58 est un boulon ou un rivet. Bien entendu, l'invention n'est pas limitée à ce mode de réalisation pour les éléments de fixation 58.

Des éléments de fixation 58 traversent le premier panneau 52 et l'éclisse 56. Pour chacun d'eux, le premier panneau 52 et l'éclisse 56 comprennent des trous traversants 52.3, 56.3 pour la tige 58.1 de l'élément de fixation 58. Des éléments de fixation 58 traversent le deuxième panneau 54 et l'éclisse 56. Pour chacun d'eux, le deuxième panneau 54 et l'éclisse 56 comprennent des trous traversants 54.3, 56.4 pour la tige 58.1 de l'élément de fixation 58. Chacun des trous traversants 52.3, 54.3, 56.3, 56.4 présente un diamètre égal ou légèrement supérieur à la tige 58.1 de l'élément de fixation 58.

Selon une configuration, les premier et deuxième panneaux 52, 54 ainsi que l'éclisse 56 sont métalliques. Bien entendu, l'invention n'est pas limitée à ce matériau. Les premier et deuxième panneaux 52, 54 ainsi que l'éclisse 56 sont réalisés en un matériau présentant une conductivité thermique élevée.

Selon un premier mode de réalisation, l'entrée d'air 40 comprend, pour au moins une éclisse 56, au moins un système de dégivrage secondaire 60 de type électrique (fonctionnant par effet joule) qui comporte au moins un corps chauffant 62 positionné, à proximité de l'éclisse 56, en dehors des première et deuxième zones Z1, Z2 recouvertes par l'éclisse 56 ainsi qu'au moins un échangeur thermique 64 relié par au moins une liaison thermique au corps chauffant 62 et intercalé au moins partiellement entre l'éclisse 56 et au moins un panneau parmi les premier et deuxième panneaux 52, 54, c'est-à-dire dans au moins une des première et deuxième zones Z1, Z2 recouvertes par l'éclisse 56.

La liaison thermique permet de transférer une énergie thermique du corps chauffant 62 vers l'échangeur thermique 64.

Le corps chauffant 62 et l'échangeur thermique 64 forment une seule et même plaque souple ou semi-rigide configurée pour s'adapter à la courbure de la lèvre 42. Cette plaque présente une épaisseur inférieure à celle du premier ou deuxième panneau 52, 54 ou à celle de l'éclisse 56. Selon une configuration, le corps chauffant 62 et l'échangeur thermique 64 forment un tapis.

Selon un mode de réalisation, le corps chauffant 62 comprend au moins une résistance électrique 66, une matrice 68 en un matériau électriquement isolant, résistant à la chaleur, conducteur thermique ou non, dans laquelle est noyée la résistance électrique 66 ainsi qu'au moins un connecteur électrique configuré pour relier la résistance électrique 66 à une alimentation électrique. Le corps chauffant 62 n'est pas plus décrit car il peut être identique à un tapis chauffant de l'art antérieur. Quel que soit le mode de réalisation, le corps chauffant 62 est configuré pour transformer une énergie électrique en une énergie thermique.

L'échangeur thermique 64 comprend au moins une couche principale 70 en un matériau conducteur thermique relié au corps chauffant 62 qui présente un orifice traversant 70.1 pour la tige 58.1 de chaque élément de fixation 58 la traversant. Cette couche principale 70 présente des première et deuxième faces F70, F70' opposées. L'échangeur thermique 64 comprend au moins une liaison, entre la couche principale 70 et le corps chauffant 62, qui permet de transférer une énergie thermique du corps chauffant 62 vers la couche principale 70.

Selon une configuration, chaque orifice traversant 70.1 présente une section supérieure à celle de la tige 58.1 de l'élément de fixation 58 qui le traverse, l'orifice traversant 70.1 et la tige 58.1 étant agencés de manière à ce qu'il subsiste un jeu tout autour de la tige 58.1 entre cette dernière et la couche 70. Ainsi, les éléments de fixation 58 ne sont pas en contact avec la couche 70. Ils sont sensiblement isolés électriquement, de préférence électriquement et thermiquement, de cette dernière.

Selon un mode de réalisation, l'échangeur thermique 64 comprend, en plus de la couche principale 70, au moins des première et deuxième couches secondaires 72, 72', entre lesquelles est positionnée la couche principale 70, qui recouvrent totalement les première et deuxième faces opposées F70, F70' de la couche principale 70. Selon une configuration, la couche principale 70 présente un bord 70.2 distant du corps chauffant 62, les première et deuxième couches secondaires 72, 72' étant jointives au niveau dudit bord 70.2 de manière à le recouvrir et électriquement l'isoler.

Selon une configuration, les couches secondaires 72, 72' sont en un matériau au moins électriquement isolant.

Selon un mode de réalisation privilégié, l'échangeur thermique 64 est configuré pour conserver une épaisseur constante au cours du temps afin de limiter les risques de desserrage ou de réduction du couple de serrage de chaque élément de fixation 58.

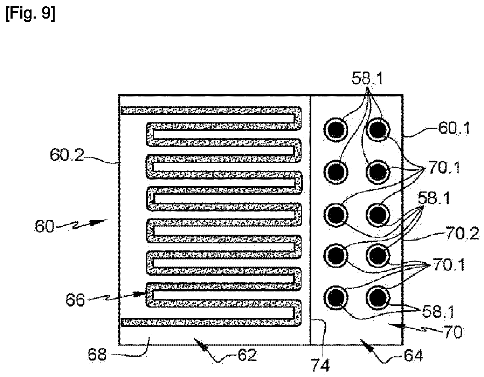

Selon un mode de réalisation visible sur les figures 6 à 9, le système de dégivrage secondaire 60 s'étend entre des premier et deuxième bords 60.1, 60.2 et comprend un corps chauffant 62 ainsi qu'un échangeur thermique 64 séparé du corps chauffant 62 par une limite séparatrice 74. Ainsi, l'échangeur thermique 64 s'étend entre la limite séparatrice 74 et le premier bord 60.1 et comprend une largeur sensiblement constante et supérieure ou égale à celle de la première ou deuxième zone Z1, Z2 du premier ou deuxième panneau 52, 54, recouverte par l'éclisse 56. En complément, le corps chauffant 62 s'étend entre la limite séparatrice 74 et le deuxième bord 60.2 et présente une largeur sensiblement constante.

Selon une application, l'entrée d'air 40 comprend :
- un premier système de dégivrage secondaire 60, intercalé entre l'éclisse 56 et le premier panneau 52, qui comprend un premier bord 60.1 approximativement à l'aplomb du premier chant 52.1 du premier panneau 52 et une limite séparatrice 74 sensiblement à l'aplomb du premier bord latéral 56.1 de l'éclisse 56 ou en dehors de la première zone Z1,
- un deuxième système de dégivrage secondaire 60', intercalé entre l'éclisse 56 et le deuxième panneau 54, qui comprend un premier bord 60.1' approximativement à l'aplomb du deuxième chant 54.1 du deuxième panneau 54 et une limite séparatrice 74' sensiblement à l'aplomb du deuxième bord latéral 56.2 de l'éclisse 56 ou en dehors de la deuxième zone Z2.

Selon un agencement, l'échangeur thermique 64 de chaque système de dégivrage secondaire 60, 60' est dimensionné pour recouvrir au moins toute la première ou deuxième zone Z1, Z2 du premier ou deuxième panneau 52, 54 recouverte par l'éclisse 56. Selon un mode de réalisation, l'échangeur thermique 64 de chaque système de dégivrage secondaire 60, 60' est dimensionné pour s'étendre au-delà de la première ou deuxième zone Z1, Z2 du premier ou deuxième panneau 52, 54, recouverte par l'éclisse 56.

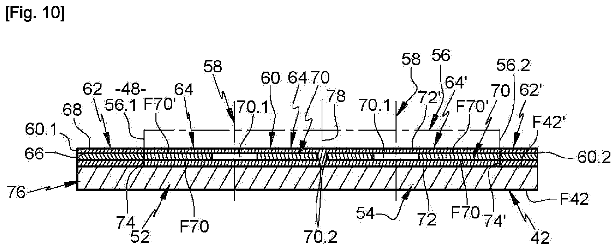

Selon un autre mode de réalisation visible sur la figure 10, le système de dégivrage secondaire 60 s'étend entre des premier et deuxième bords 60.1, 60.2 et comprend des premier et deuxième corps chauffants 62, 62' positionnés de part et d'autre de l'éclisse 56 ainsi qu'au moins un échangeur thermique 64 positionné entre les premier et deuxième corps chauffants 62, 62' et séparé de ces derniers respectivement par des première et deuxième limites séparatrices 74, 74' situées à l'aplomb des premier et deuxième bords latéraux 56.1, 56.2 de l'éclisse 56 ou en dehors des première et deuxième zones Z1, Z2 des premier et deuxième panneaux 52, 54. Selon une configuration, le système de dégivrage secondaire 60 comprend des premier et deuxième échangeurs thermiques 64, 64' positionnés entre les premier et deuxième corps chauffants 62, 62' et reliés respectivement aux premier et deuxième corps chauffants 62, 62'. Selon une application, le (ou les) échangeur(s) thermique(s) 64, 64' est (ou sont) positionné(s) entre l'éclisse 56 et les premier et deuxième panneaux 52, 54, les première et deuxième limites séparatrices 74, 74' étant positionnées sensiblement à l'aplomb des premier et deuxième bords latéraux 56.1, 56.2 des éclisses 56 ou en dehors des première et deuxième zones Z1, Z2 des premier et deuxième panneaux 52, 54 recouvertes par l'éclisse 56. Selon un premier mode opératoire, les premier et deuxième panneaux 52, 54 étant disjoints, les premier et deuxième systèmes de dégivrage secondaires 60, 60' sont positionnés et fixés respectivement contre les faces intérieures F52', F54' des premier et deuxième panneaux 52, 54. En suivant, l'éclisse 56 est positionnée contre les premier et deuxième systèmes de dégivrage secondaires 60, 60' puis reliée aux premier et deuxième panneaux 52, 54 par les éléments de fixation 58.

Selon un deuxième mode opératoire, les premier et deuxième panneaux 52, 54 forment un unique panneau 76 sur lequel sont positionnés et fixés les premier et deuxième systèmes de dégivrage secondaires 60, 60' jointifs qui ne forment qu'une unique et même pièce. En suivant, ce sous-ensemble est découpé selon une ligne de découpe 78 de manière à former les premier et deuxième panneaux 52, 54 disjoints, chacun pourvus d'un système de dégivrage secondaire 60, 60'. Ensuite, l'éclisse 56 est positionnée contre les premier et deuxième systèmes de dégivrage secondaires 60, 60' puis reliée aux premier et deuxième panneaux 52, 54 par les éléments de fixation 58.

Bien entendu, l'invention n'est pas limitée à ces modes opératoires pour l'assemblage.

Après l'assemblage des premier et deuxième panneaux 52, 54, des éclisses 56 et des systèmes de dégivrage secondaires 60, 60', un jeu peut être présent entre les premier et deuxième panneaux 52, 54 et les systèmes de dégivrage secondaires 60. Dans ce cas, une matière de comblement 80, comme du mastic par exemple, est mise en place pour combler ce jeu. Selon une configuration, pour chaque éclisse 56, l'entrée d'air 40 comprend au moins un système de dégivrage secondaire 60.

Quel que soit le mode de réalisation, chaque système de dégivrage secondaire 60 permet de compenser la réduction de la capacité de dégivrage ou anti-givrage du système de dégivrage principal 50 en raison de l'augmentation de l'épaisseur de la lèvre 42 au droit de chaque éclisse 56. Ainsi, la lèvre 42 présente une capacité de dégivrage ou anti-givrage homogène sur toute la surface extérieure F42 de la lèvre 42. Quel que soit le mode de réalisation, les systèmes de dégivrage principal et secondaire 50, 60 sont positionnés à une distance constante de la surface extérieure F42 de la lèvre 42.

Quel que soit le mode de réalisation, l'échangeur thermique 64 comprend au moins une couche principale 70 en un matériau conducteur thermique comprenant un orifice traversant 70.1 pour la tige 58.1 de chaque élément de fixation 58 la traversant, ladite couche principale 70 étant intercalée au moins partiellement entre l'éclisse 56 et au moins un panneau parmi les premier et deuxième panneaux 52, 54 pour assurer un transfert thermique en direction des première et deuxième zones Z1, Z2 des premier et deuxième panneaux 52, 54 recouvertes par l'éclisse 56. La couche principale 70 est configurée pour résister à des efforts de compression générés par les éléments de fixation 58 reliant l'éclisse 56 et les premier et deuxième panneaux 52, 54.

Selon un premier mode de réalisation visible sur les figures 6 à 10, l'échangeur thermique 64 est un élément passif et ne produit pas lui-même un échauffement. Selon ce premier mode de réalisation, le système de dégivrage secondaire 60 comprend au moins un corps chauffant 62, non recouvert par l'éclisse 56, configuré pour transformer une énergie électrique en une énergie thermique ainsi qu'une liaison, reliant le corps chauffant 62 et l'échangeur thermique 64, configurée pour assurer un transfert thermique entre le corps chauffant 62 et l'échangeur thermique 64, ce dernier étant configuré pour diffuser cette énergie électrique en direction des première et deuxième zones Z1, Z2 des premier et deuxième panneaux 52, 54, recouvertes par l'éclisse 56. Le corps chauffant 62 de chaque système de dégivrage secondaire 60, qui apporte les calories, est décalé par rapport à l'éclisse 56, ce qui limite les risques d'endommagement dudit corps chauffant 62 lors de l'assemblage en raison d'un éventuel écrasement entre l'éclisse 56 et le premier ou deuxième panneau 52, 54. Seul l'échangeur thermique 64, qui assure le transfert des calories entre le corps chauffant 62 et la zone de l'éclisse 56 et ne présente pas de résistances électriques 66 ou d'éléments analogues, est intercalé entre l'éclisse 56 et les premier et deuxième panneaux 52, 54.

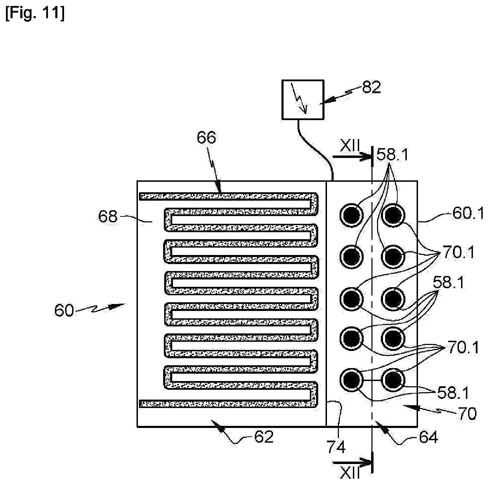

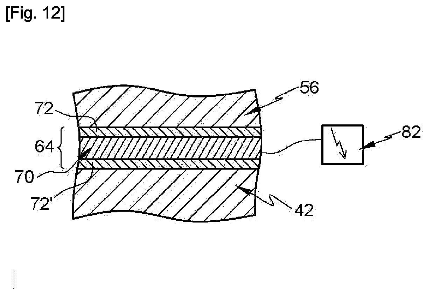

Selon un deuxième mode de réalisation visible sur les figures 11 et 12, l'échangeur thermique 64 comprend au moins une couche active 70, comme un feuillard métallique, configurée pour transformer une énergie électrique en une énergie thermique et la diffuser en direction des première et deuxième zones Z1, Z2 des premier et deuxième panneaux 52, 54, recouvertes par l'éclisse 56. Contrairement à un corps de chauffant 62 qui comporte des résistances et présente une résistance à la compression relativement limitée, un feuillard présente une résistance à la compression relativement importante lui permettant de résister aux efforts de compression, entre l'éclisse 56 et les premier et deuxième panneaux 52, 54, produits par les éléments de fixation 58. Selon un agencement, l'échangeur thermique 64 comprend des première et deuxième couches secondaires 72, 72' en un matériau électriquement isolant entre lesquelles est positionnée la couche active 70, cette dernière étant électriquement isolée de l'éclisse 56 et des premier et deuxième panneaux 52, 54 par les première et deuxième couches secondaires 72, 72'. Selon ce mode de réalisation, le système d'énergie secondaire 60 comprend au moins une alimentation en énergie électrique 82 reliée à la couche active 70.

Selon une première configuration, la couche active 70 est uniquement alimentée en énergie électrique par au moins une alimentation en énergie électrique 82, ladite énergie électrique étant transformée par la couche active 70 en énergie thermique qu'elle diffuse en direction des première et deuxième zones Z1, Z2 des premier et deuxième panneaux 52, 54, recouvertes par l'éclisse 56.

Selon une deuxième configuration visible sur la figure 11, la couche active 70 est alimentée en énergie électrique par au moins une alimentation en énergie électrique 82 et en énergie thermique par au moins un corps chauffant 62, la couche active 70 diffusant l'énergie thermique reçue ou l'énergie thermique générée en direction des première et deuxième zones Z1, Z2 des premier et deuxième panneaux 52, 54, recouvertes par l'éclisse 56.

## Revendications

1. Entrée d'air (40) d'un ensemble de propulsion d'aéronef comprenant une lèvre (42) ainsi qu'un système de dégivrage principal configuré pour dégivrer au moins partiellement la lèvre (42), ladite lèvre (42) comportant au moins des premier et deuxième panneaux (52, 54) qui présentent des faces extérieure et intérieure (F52, F54, F52', F54'), au moins une éclisse (56), positionnée à cheval sur les premier et deuxième panneaux (52, 54), qui s'étend entre des premier et deuxième bords latéraux (56.1, 56.2) et présente une face de contact (F56) comportant une première partie (F56.1) faisant face à une première zone (Z1) de la face intérieure (F52') du premier panneau (52) et une deuxième partie (F56.2) faisant face à une deuxième zone (Z2) de la face intérieure (F54') du deuxième panneau (54) ainsi que des éléments de fixation (58) reliant l'éclisse (56) et les premier et deuxième panneaux (52, 54) ; **caractérisée en ce que** l'entrée d'air comprend au moins un système de dégivrage secondaire (60) qui comporte au moins un échangeur thermique (64) comprenant au moins une couche principale (70) en un matériau conducteur thermique comprenant un orifice traversant (70.1) pour chaque élément de fixation (58) qui la traverse, ladite couche principale (70) étant intercalée au moins partiellement entre l'éclisse (56) et au moins un panneau parmi les premier et deuxième panneaux (52, 54).

2. Entrée d'air (40) selon la revendication précédente, **caractérisée en ce que** chaque élément de liaison (58) présente une tige (58.1) traversant l'éclisse (56) et le premier ou deuxième panneau (52, 54) et **en ce que** chaque orifice traversant (70.1) présente une section supérieure à celle de la tige (58.1) de l'élément de fixation (58) qui le traverse, l'orifice traversant (70.1) et la tige (58.1) étant agencés de manière à ce qu'il subsiste un jeu tout autour de la tige (58.1) entre la couche principale (70) et la tige (58.1), chaque élément de fixation (58) étant électriquement isolé de la couche principale (70).

3. Entrée d'air (40) selon l'une des revendications précédentes, **caractérisée en ce que** la couche principale (70) présente des première et deuxième faces (F70, F70') opposées et **en ce que** l'échangeur thermique (64) comprend au moins des première et deuxième couches secondaires (72, 72'), entre lesquelles est positionnée la couche principale (70), qui recouvrent totalement les première et deuxième faces opposées (F70, F70') de la couche principale (70), les couches secondaires (72, 72') étant en un matériau au moins électriquement isolant.

4. Entrée d'air (40) selon l'une des revendications précédentes, **caractérisée en ce que** le système de dégivrage secondaire (60) comprend au moins un corps chauffant (62), positionné en dehors des première et deuxième zones (Z1, Z2) recouvertes par l'éclisse (56), configuré pour transformer une énergie électrique en une énergie thermique ainsi qu'au moins une liaison thermique configurée pour transférer une énergie thermique du corps chauffant (62) vers l'échangeur thermique (64).

5. Entrée d'air (40) selon la revendication précédente, **caractérisée en ce que** le corps chauffant (62) comprend au moins une résistance électrique (66), une matrice (68) en un matériau électriquement isolant dans laquelle est noyée la résistance électrique (66) ainsi qu'au moins un connecteur électrique configuré pour relier la résistance électrique (66) à une alimentation électrique.

6. Entrée d'air (40) selon l'une des revendications 4 à 5, **caractérisée en ce que** le corps chauffant (62) et l'échangeur thermique (64) forment une seule et même plaque souple ou semi-rigide configurée pour s'adapter à la courbure de la lèvre (42).

7. Entrée d'air (40) selon la revendication précédente, **caractérisée en ce que** le système de dégivrage secondaire (60) s'étend entre des premier et deuxième bords (60.1, 60.2), l'échangeur thermique (64) s'étendant entre le premier bord (60.1) et une limite séparatrice (74), le corps chauffant (62) s'étendant entre la limite séparatrice (74) et le deuxième bord (60.2), l'échangeur thermique (64) présentant une largeur supérieure ou égale à celle de la première ou deuxième zone (Z1, Z2) recouverte par l'éclisse (56).

8. Entrée d'air (40) selon la revendication précédente, **caractérisée en ce que** l'entrée d'air (40) comprend un premier système de dégivrage secondaire (60) intercalé entre l'éclisse (56) et le premier panneau (52) ainsi qu'un deuxième système de dégivrage secondaire (60') intercalé entre l'éclisse (56) et le deuxième panneau (54).

9. Entrée d'air (40) selon la revendication 7, **caractérisée en ce que** le système de dégivrage secondaire (60) comprend des premier et deuxième corps chauffants (62, 62') positionnés de part et d'autre de l'éclisse (56) ainsi qu'au moins un échangeur thermique (64) positionné entre les premier et deuxième corps chauffants (62, 62').

10. Entrée d'air selon l'une des revendications précédentes, **caractérisée en ce que** la couche principale (70) est un feuillard configuré pour transformer une énergie électrique en une énergie thermique et **en ce que** le système de dégivrage secondaire (60) comprend au moins une alimentation en énergie électrique (82) configurée pour alimenter en énergie électrique la couche principale (70).

11. Aéronef comprenant au moins une entrée d'air selon l'une des revendications précédentes.

## Patentansprüche

1. Lufteinlass (40) einer Luftfahrzeug-Antriebseinheit, welcher eine Lippe (42) sowie ein Hauptenteisungssystem, das dafür ausgelegt ist, die Lippe (42) wenigstens teilweise zu enteisen, umfasst, wobei die Lippe (42) mindestens eine erste und eine zweite Platte (52, 54), die eine Außen- und eine Innenseite (F52, F54, F52', F54') aufweisen, umfasst, mindestens eine Verbindungslasche (56), die auf der ersten und der zweiten Platte (52, 54) aufsitzend positioniert ist, die sich zwischen einem ersten und einem zweiten Seitenrand (56.1, 56.2) erstreckt und eine Kontaktseite (F56) aufweist, die einen ersten Teil (F56.1), der einem ersten Bereich (Z1) der Innenseite (F52') der ersten Platte (52) zugewandt ist, und einen zweiten Teil (F56.2), der einem zweiten Bereich (Z2) der Innenseite (F54') der zweiten Platte (54) zugewandt ist, umfasst, sowie Befestigungselemente (58), welche die Verbindungslasche (56) und die erste und die zweite Platte (52, 54) verbinden; **dadurch gekennzeichnet, dass** der Lufteinlass mindestens ein sekundäres Enteisungssystem (60) umfasst, das mindestens einen Wärmetauscher (64) aufweist, der mindestens eine Hauptschicht (70) aus einem wärmeleitenden Material umfasst, die eine Durchgangsöffnung (70.1) für jedes Befestigungselement (58), das sie durchquert, umfasst, wobei die Hauptschicht (70) wenigstens teilweise zwischen der Verbindungslasche (56) und mindestens einer Platte von der ersten und der zweiten Platte (52, 54) angeordnet ist.

2. Lufteinlass (40) nach dem vorhergehenden Anspruch, **dadurch gekennzeichnet, dass** jedes Verbindungselement (58) einen Schaft (58.1) aufweist, der die Verbindungslasche (56) und die erste oder die zweite Platte (52, 54) durchquert, und dadurch, dass jede Durchgangsöffnung (70.1) einen Querschnitt aufweist, der größer als derjenige des Schaftes (58.1) des Befestigungselements (58) ist, der sie durchquert, wobei die Durchgangsöffnung (70.1) und der Schaft (58.1) derart ausgebildet sind, dass rings um den Schaft (58.1) ein Spiel zwischen der Hauptschicht (70) und dem Schaft (58.1) verbleibt, wobei jedes Befestigungselement (58) von der Hauptschicht (70) elektrisch isoliert ist.

3. Lufteinlass (40) nach einem der vorhergehenden Ansprüche, **dadurch gekennzeichnet, dass** die Hauptschicht (70) eine erste und eine zwei Seite (F70, F70') aufweist, die einander gegenüberliegen, und dadurch, dass der Wärmetauscher (64) mindestens eine erste und eine zwei sekundäre Schicht (72, 72') aufweist, zwischen denen die Hauptschicht (70) positioniert ist und welche die erste und die zweite Seite (F70, F70') der Hauptschicht (70), die einander gegenüberliegen, vollständig bedecken, wobei die sekundären Schichten (72, 72') aus einem Material bestehen, dass wenigstens elektrisch isolierend ist.

4. Lufteinlass (40) nach einem der vorhergehenden Ansprüche, **dadurch gekennzeichnet, dass** das sekundäre Enteisungssystem (60) mindestens einen Heizkörper (62) umfasst, der außerhalb des ersten und des zweiten Bereichs (Z1, Z2), die von der Verbindungslasche (56) bedeckt sind, positioniert ist und dafür ausgelegt ist, eine elektrische Energie in eine Wärmeenergie umzuwandeln, sowie mindestens eine thermische Verbindung, die dafür ausgelegt ist, eine Wärmeenergie von dem Heizkörper (62) zu dem Wärmetauscher (64) zu übertragen.

5. Lufteinlass (40) nach dem vorhergehenden Anspruch, **dadurch gekennzeichnet, dass** der Heizkörper (62) mindestens einen elektrischen Widerstand (66), eine Matrix (68) aus einem elektrisch isolierenden Material, in die der elektrische Widerstand (66) eingebettet ist, sowie mindestens einen elektrischen Verbinder, der dafür ausgelegt ist, den elektrischen Widerstand (66) mit einer Stromversorgung zu verbinden, umfasst.

6. Lufteinlass (40) nach einem der Ansprüche 4 bis 5, **dadurch gekennzeichnet, dass** der Heizkörper (62) und der Wärmetauscher (64) ein und dieselbe flexible oder halbstarre Platte bilden, die dafür ausgelegt ist, sich an die Krümmung der Lippe (42) anzupassen.

7. Lufteinlass (40) nach dem vorhergehenden Anspruch, **dadurch gekennzeichnet, dass** sich das sekundäre Enteisungssystem (60) zwischen einem ersten und einem zweiten Rand (60.1, 60.2) erstreckt, wobei sich der Wärmetauscher (64) zwischen dem ersten Rand (60.1) und einer Trenngrenze (74) erstreckt, der Heizkörper (62) sich zwischen der Trenngrenze (74) und dem zweiten Rand (60.2) erstreckt und der Wärmetauscher (64) eine Breite aufweist, die größer oder gleich derjenigen des von der Verbindungslasche (56) bedeckten ersten oder zweiten Bereichs (Z1, Z2) ist.

8. Lufteinlass (40) nach dem vorhergehenden Anspruch, **dadurch gekennzeichnet, dass** der Lufteinlass (40) ein erstes sekundäres Enteisungssystem (60), das zwischen der Verbindungslasche (56) und der ersten Platte (52) angeordnet ist, sowie ein zweites sekundäres Enteisungssystem (60'), das zwischen der Verbindungslasche (56) und der zweiten Platte (54) angeordnet ist, umfasst.

9. Lufteinlass (40) nach Anspruch 7, **dadurch gekennzeichnet, dass** das sekundäre Enteisungssystem (60) einen ersten und einen zweiten Heizkörper (62, 62'), die beiderseits der Verbindungslasche (56) positioniert sind, sowie mindestens einen Wärmetauscher (64), der zwischen dem ersten und dem zweiten Heizkörper (62, 62') positioniert ist, umfasst.

10. Lufteinlass nach einem der vorhergehenden Ansprüche, **dadurch gekennzeichnet, dass** die Hauptschicht (70) ein Stahlband ist, das dafür ausgelegt ist, eine elektrische Energie in eine Wärmeenergie umzuwandeln, und dadurch, dass das sekundäre Enteisungssystem (60) mindestens eine elektrische Energieversorgung (82) umfasst, die dafür ausgelegt ist, die Hauptschicht (70) mit elektrischer Energie zu versorgen.

11. Luftfahrzeug, welches mindestens einen Lufteinlass nach einem der vorhergehenden Ansprüche umfasst.

## Claims

1. Air inlet (40) of an aircraft propulsion assembly, comprising a lip (42) and a main de-icing system configured to at least partially de-ice the lip (42), said lip (42) including at least first and second panels (52, 54) having inner and outer faces (F52, F54, F52', F54'), at least one splice plate (56), which is positioned to straddle the first and second panels (52, 54), extends between first and second lateral edges (56.1, 56.2) and has a contact face (F56) including a first part (F56.1) facing a first region (Z1) of the inner face (F52') of the first panel (52), and a second part (F56.2) facing a second region (Z2) of the inner face (F54') of the second panel (54), and also comprising fixing elements (58) connecting the splice plate (56) and the first and second panels (52, 54), **characterized in that** the air inlet comprises at least one secondary de-icing system (60) which includes at least one heat exchanger (64) comprising at least a main layer (70), which is made of a thermally conductive material and comprises a through-opening (70.1) for each fixing element (58) passing therethrough, said main layer (70) being interposed at least partially between the splice plate (56) and at least one of the first and second panels (52, 54).

2. Air inlet (40) according to the preceding claim, **characterized in that** each connecting element (58) has a rod (58.1) which passes through the splice plate (56) and the first or second panel (52, 54), and **in that** each through-opening (70.1) has a cross section greater than that of the rod (58.1) of the fixing element (58) which passes therethrough, the through-opening (70.1) and the rod (58.1) being arranged in such a way that there remains a gap all around the rod (58.1) between the main layer (70) and the rod (58.1), each fixing element (58) being electrically insulated from the main layer (70).

3. Air inlet (40) according to either of the preceding claims, **characterized in that** the main layer (70) has opposing first and second faces (F70, F70'), and **in that** the heat exchanger (64) comprises at least first and second secondary layers (72, 72'), between which the main layer (70) is positioned and which completely cover the opposing first and second faces (F70, F70') of the main layer (70), the secondary layers (72, 72') being made of a material which is at least electrically insulating.

4. Air inlet (40) according to one of the preceding claims, **characterized in that** the secondary de-icing system (60) comprises at least one heating body (62), which is positioned outside the first and second regions (Z1, Z2) covered by the splice plate (56) and is configured to convert electrical energy into thermal energy, and at least one thermal connection configured to transfer thermal energy from the heating body (62) to the heat exchanger (64).

5. Air inlet (40) according to the preceding claim, **characterized in that** the heating body (62) comprises at least one electrical resistor (66), a matrix (68), which is made of an electrically insulating material and in which the electrical resistor (66) is embedded, and at least one electrical connector configured to connect the electrical resistor (66) to a power supply.

6. Air inlet (40) according to either of Claims 4 and 5, **characterized in that** the heating body (62) and the heat exchanger (64) form a single flexible or semi-rigid plate configured to adapt to the curvature of the lip (42).

7. Air inlet (40) according to the preceding claim, **characterized in that** the secondary de-icing system (60) extends between first and second edges (60.1, 60.2), the heat exchanger (64) extending between the first edge (60.1) and a separating boundary (74), the heating body (62) extending between the separating boundary (74) and the second edge (60.2), the heat exchanger (64) having a width greater than or equal to that of the first or second region (21, Z2) covered by the splice plate (56).

8. Air inlet (40) according to the preceding claim, **characterized in that** the air inlet (40) comprises a first secondary de-icing system (60) interposed between the splice plate (56) and the first panel (52), and a second secondary de-icing system (60') interposed between the splice plate (56) and the second panel (54).

9. Air inlet (40) according to Claim 7, **characterized in that** the secondary de-icing system (60) comprises first and second heating bodies (62, 62'), which are positioned on either side of the splice plate (56), and at least one heat exchanger (64) positioned between the first and second heating bodies (62, 62').

10. Air inlet according to one of the preceding claims, **characterized in that** the main layer (70) is a strip configured to convert electrical energy into thermal energy, and **in that** the secondary de-icing system (60) comprises at
least one electrical energy supply (82) configured to supply electrical energy to the main layer (70).

11. Aircraft comprising at least one air inlet according to one of the preceding claims.
